# EUROPÄISCHE PATENTSCHRIFT

(11) **EP 1 175 644 B1**
(45) Veröffentlichungstag und Bekanntmachung des Hinweises auf die Patenterteilung: **12.02.2003**
(21) Anmeldenummer: 00929462.0
(22) Anmeldetag: 28.04.2000
(51) Int. Cl.: G05B 19/042

(54) **EINRICHTUNG ZUM UBERWACHEN VON BETRIEBSPARAMETERN AN EINE ELEKTRISCHE ODER ELEKTRONISCHE STEUERUNGSEINRICHTUNG AUFWEISENDEN ANLAGEN**
DEVICE FOR MONITORING THE OPERATIONAL PARAMETERS OF INSTALLATIONS WHICH HAVE AN ELECTRIC OR ELECTRONIC CONTROL UNIT
DISPOSITIF POUR LA SURVEILLANCE DE PARAMETRES DE FONCTIONNEMENT DANS DES INSTALLATIONS COMPORTANT UN DISPOSITIF DE COMMANDE ELECTRIQUE OU ELECTRONIQUE

(30) Priorität: 05.05.1999 DE 19920532
(43) Veröffentlichungstag der Anmeldung: 30.01.2002
(73) Patentinhaber: Mika Heiztechnik GmbH, 66957 Rupperstweiler (DE)
(72) Erfinder: MISTLER, Hans, J., D-66957 Ruppertsweiler (DE)
(74) Vertreter: Klein, Friedrich
(86) Internationale Anmeldenummer: EP0003873
(87) Internationale Veröffentlichungsnummer: WO00068746

(56) Entgegenhaltungen:
- WO-A-96/05552
- US-A- 4 165 532
- US-A- 5 172 097
- US-A- 5 789 887
- US-A- 5 875 248

## Beschreibung

Die Erfindung betrifft eine Einrichtung zum Überwachen von Betriebsparametern an eine elektrische oder elektronische Steuerungseinrichtung aufweisenden Anlagen, beispielsweise an Heizungsanlagen, entsprechend dem Oberbegriff des Patentanspruches 1.

Heizungsanlagen sind im allgemeinen mit einer elektrischen oder elektronischen Steuerungseinrichtung sowie mit mechanischen Funktionsabläufen für die verschiedenen Betriebsparameter ausgestattet, die mittels eines Bedienfeldes individuell eingestellt und dabei insbesondere an die unterschiedlichen Außentemperaturen angepaßt werden können. Neben diesen den individuellen Wünschen anpaßbaren Betriebsparametern, deren Einstellung bzw Festlegung im allgemeinen dem Betreiber überlassen ist, enthält das Bedienfeld noch weitere Einstellmittel, um beispielsweise die Neigung der Heizkennlinie des Kessels zu verändern, oder um eine Niveauverschiebung derselben zu erreichen. Das Bedienfeld kann ferner Einstellmittel für die Neigung und Niveauverschiebung der Heizkennlinie eines eventuell vorhandenen Mischerkreises oder für einen Kesselwasser-Temperaturregler, oder auch Schalter für die Abgasüberwachung, für die Durchführung von Abgastests oder auch für die Aufrechterhaltung eines Notbetriebes für bestimmte der vorgenannten Betriebsparameter enthalten.

So lange die Gesamteinstellung der Betriebsparameter von einem Fachmann durchgeführt wird, arbeiten heutige Steuerungseinrichtungen einschließlich der mechanischen Funktionsabläufe durchaus insgesamt zufriedenstellend. Kritisch wird die Situation lediglich dann, wenn die Leistung der Anlage, beispielsweise einer Heizungsanlage mit den individuellen Wünschen des Betreibers nicht mehr übereinstimmt oder Störungen irgendwelcher Art auftreten, die beispielsweise auch durch bewußt herbeigeführte Manipulationen Dritter hervorgerufen werden können.

Hier wird dann häufig zunächst zur Selbsthilfe gegriffen, die in den meisten Fällen nicht nur erfolglos bleibt, sondern auch Gefahren für die Anlage oder gar für die Sicherheit des Betreibers hervorrufen, sodaß dann doch ein Fachmann zur Hilfe gerufen werden muß. Dieser findet die Anlage hinsichtlich der Einstellung der Betriebsparameter in einem meist desolaten Zustand, was einerseits die Suche der tatsächlichen Fehlerursache erheblich erschwert und andererseits eine neue Grundeinstellung erfordert.

Besonders kritisch wird diese Situation für das Vertrauensverhältnis zwischen dem Fachbetrieb und dem Betreiber dann, wenn die Störung relativ kurz nach der Durchführung eines Kundendienstes oder der Durchführung einer Reparatur auftritt, da im Hinblick auf Garantie- und Gewährleistungsansprüche erfahrungsgemäß dann jede Seite versucht, die Schuld der jeweils anderen Seite zuzuweisen.

Der Erfindung liegt daher die Aufgabe zu Grunde hier Abhilfe zu schaffen und gattungsgemäße Einrichtungen mit einer elektrischen oder elektronischen Steuerungseinrichtungen derart weiterzubilden, daß bei oder nach Eintritt eines Störungsfalles die Ursache hierfür zumindest weitestgehend erkennbar und auch feststellbar ist, ob der Störungsfall auf einen Fehler der Anlage zurückzuführen ist, oder ob vor dem Eintritt des Störungsfalles die aktuellen Betriebsparameter der Anlage verändert oder manipuliert wurden, oder ob Eingriffe in die mechanischen Funktionsabläufe vorgenommen wurden.

Ausgehend von einer gattungsgemäßen elektrischen oder elektronischen Steuerungseinrichtung wird diese Aufgabe dadurch gelöst, daß die Mikroprozessoreinheit über eine Datenbusleitung mit einem nichtflüchtigen Speicher zur Speicherung und Dokumentation der der Mikroprozessoreinheit zuführbaren Eingabe- und/oder Meßwertdaten der Betriebsparameter verbunden ist, und diese Daten mittels eines über eine Schnittstelle an die Mikroprozessoreinheit anschließbaren Service-Gerätes aus dem nichtflüchtigen Speicher auslesbar und im Service-Gerät speicherbar und aus diesem abrufbar sind, und das Service-Gerät (4) mit einer elektronischen Signatur versehen ist, die im nichtflüchtigen Speicher (5) speicherbar und über die Schnittstelle (3) aus diesem auslesbar ist, wobei das Service-Gerät (4) über die Schnittstelle (3) mit dem Bedienfeld (13) oder der Mikroprozessoreinheit (2) verbindbar ist, um die eingebenen Sollwerte der Betriebsparameter zusammen mit der elektronischen Signatur des Service-Gerätes (4) im nichtflüchtigen Speicher (5) zu speichern und die gespeicherten Werte über die Schnittstelle (3) aus dem nichtflüchtigen Speicher (5) auszulessen.

Durch die erfindungsgemäße Maßnahme, die der Mikroprozessoreinheit zuführbaren Eingabe- und oder Meßwertdaten gleichzeitig einem über eine Datenbusleitung mit der Mikroprozessoreinheit verbundenen nichtflüchtigen Speicher zur dauerhaften Speicherung zuzuführen und die ge-speicherten Werte mittels eines über eine Schnittstelle an die Mikroprozessoreinheit anschließbaren Service-Gerätes aus dem nichtflüchtigen Speicher auszulesen, können sämtliche eingegebenen Eingabedaten der Betriebsparameter rekonstruiert werden. Somit kann nachträglich festgestellt werden, ob eine Störung ihre Ursache in fehlerhaft eingegebenen Betriebsparametern hat, oder ob die Störung durch ein Versagen oder durch einen nicht legitimierten Einbau oder durch einen Wechsel von funktionswesentlichen Bauteilen der Anlage begründet ist. Da die Werte der Meßwertfühler ebenfalls im nichtflüchtigen Speicher abgespeichert werden und auslesbar sind, kann mittels des Service-Gerätes die Ursache für eine Störung selbst nach deren Beseitigung noch festgestellt werden.

Da das Service-Gerät mit einer elektronischen Signatur versehen und diese im nichtflüchtigen Speicher speicherbar und über die Schnittstelle aus diesem auslesbar ist, kann bei jedem Kundendienst oder nach jeder Reparatur auch nachträglich noch festgestellt werden, welcher Fachbetrieb bzw welcher Mitarbeiter eines bestimmten Fachbetriebes die Einstellungen vorgenommen hat. Wurden seit der letzten durch eine Signatur belegten Eingabe von Betriebsparametern Veränderungen durch eine nicht authorisierte Person, beispielsweise durch den Betreiber der Anlage selbst vorgenommen, so ist dies aufgrund der für die letzte Eingabe von Betriebsparametern fehlenden Signatur leicht festell- und nachweisbar.

Um durch die Identifikation der Service-Geräte für die Durchführung von Wartungs- oder Reparaturarbeiten nicht an ein bestimmtes Unternehmen oder an einen Mitarbeiter eines Unternehmens gebunden zu sein, ist die im nichtflüchtigen Speicher gespeicherte elektronische Signatur des Service-Gerätes löschbar und durch die elektronische Signatur eines anderen Service-Gerätes ersetzbar. Damit ist es möglich, selbst dann, wenn das die Wartungs- oder Reparaturarbeiten durchführende Unternehmen oder dessen Mitarbeiter des öfteren gewechselt werden, nachträglich noch festzustellen, welches Unternehmen bzw welcher Mitarbeiter die jeweilige Arbeit durchgeführt hat.

Um die Eingabe von Betriebsparametem auch mittels des Service-Gerätes durchführen und die entsprechenden Eingabewerte in diesem speichern zu können, ist das Service-Gerät über die Schnittstelle mit dem Bedienfeld oder der Mikroprozessoreinheit verbindbar, wobei die mit dem Service-Gerät eingebbaren Sollwerte der Betriebsparameter zusammen mit der elektrischen Signatur des Service-Gerätes im nichtflüchtigen Speicher speicherbar und die gespeicherten Werte über die Schnittstelle aus dem nichtflüchtigen Speicher auslesbar sind. Damit ist es möglich, die über das Service-Gerät eingegebenen Werte der verschiedenen Betriebsparameter im Service-Gerät zu speichern und gegebenenfalls über eine Registriernummer der Steuerungseinrichtung oder der Heizungsanlage zu zuordnen. Sofern die Werte der Betriebsparameter durch einen mißglückten Selbsthilfeversuch stark durcheinander gekommen sind, ist es möglich sämtliche im Service-Gerät gespeicherten Daten der Betriebsparameter mit einer Eingabe der Mikroprozessoreinheit zuzuführen.

Um mit Hilfe des Service-Gerätes nicht nur feststellen zu können, daß bestimmte Betriebsparameter mit einem bestimmten Service-Gerät und damit von einem bestimmten Unternehmen oder einer bestimmten Person verändert wurden, sondern gleichzeitig auch feststellen zu können, wann bestimmte Veränderungen durchgeführt wurden, oder wann bestimmte Betriebsstörungen aufgetreten sind, weist die Mikroprozessoreinheit und/oder der nichtflüchtige Speicher eine Echtzeituhr auf, sodaß zumindest bei Veränderungen der Eingabedaten der Betriebsparameter diese zusammen mit der Echtwertzeitangabe im nichtflüchtigen Speicher speicherbar sind und die gespeicherten Werte über die Schnittstelle aus dem nichtflüchtigen Speicher auslesbar sind.

Sofern hierbei die Meßwertdaten von Über- oder Unterschreitungen von Grenzwerten der Betriebsparameter zusammen mit der Echtwertzeitangabe im nichtflüchtigen Speicher speicherbar und die gespeicherten Werte über die Schnittstelle aus dem nichtflüchtigen Speicher auslesbar sind, können Störungsursachen sowohl hinsichtlich der Häufigkeit als auch hinsichtlich der zeitlichen Abstände ihres Auftretens genau festgestellt und nachgewiesen werden.

Eine weitere Möglichkeit zur Erkennung von Störungsursachen kann dadurch erreicht werden, daß die Funktion von funktionswesentlichen Teilen der Anlage mittels Sensoren überwachbar ist und deren Signale dem nichtflüchtigen Speicher und/oder der Mikroprozessoreinheit und/oder dem Bedienfeld zuführbar sind. Auf diese Weise kann beispielsweise das Aussetzen einer Umwälzpumpe für das Heizungs- oder Brauchwasser, oder auch das Aussetzen der Zündvorrichtung erkannt und dokumentiert werden.

Sofern die dem nichtflüchtigen Speicher zuführbaren Signale der Sensoren in diesem zusammen mit der Echtwertzeitangabe speicherbar sind, und die gespeicherten Werte über die Schnittstelle aus diesem auslesbar sind, können die Störungsursachen auch zeitlich genau fixiert werden.

Um sicherzustellen, daß die Steuerungseinrichtung nicht manipulierbar ist und beispielsweise bei gegebenenfalls auch gewillkürtem Ausfall der Stromversorgung die Überwachungsvorgänge für eine geeignet lange Zeit gewährleisten zu können, sind zumindest die Mikroprozessoreinheit, der nichtflüchtige Speicher sowie die Eingangselektronik für die Meßwertfühler und die Sensoren mit einer aufladbaren Batterie verbunden, die vorteilhafter Weise über das Netzteil der Steuerungseinrichtung speisbar ist.

Da die Einstellmittel für bestimmte, insbesondere sicherheitsrelevante Betriebsparameter, die nur vom Fachpersonal verändert werden sollen, meist innerhalb einer Verkleidung angeordnet und somit von außen nicht zugänglich sind, sind die Zugänge zu außerhalb des Bedienfeldes angeordneten Einstellmitteln für Betriebsparameter durch Sicherheitskontakte überwachbar, deren Ausgangssignale dem nichtflüchtigen Speicher zuführbar und in diesem zusammen mit der Echtwertzeitangabe speicherbar sind und die gespeicherten Werte über die Schnittstelle aus diesem auslesbar sind. Dabei kann vorgesehen sein, daß die Ausgangssignale dieser Sicherheitskontakte innerhalb der Mikroprozessoreinheit ein Sperrsignal für die gesamte Steuerungseinrichtung auslösen, und diese Sperre nur durch ein bestimmtes Signal des Service-Gerätes wieder gelöscht werden kann. Damit kann insbesondere dem zur Selbsthilfe neigenden Betreiber, schon der Versuch, an seiner Eingriffssphäre absichtlich entzogenen Einstellmitteln Veränderungen beabsichtigt oder durchgeführt zu haben, relativ leicht nachgewiesen werden.

Dem Einbau und/oder der Verwendung von beispielsweise gestohlenen oder auf andere nicht reelle Art beschafften Bauteilen einer Anlage, beispielsweise der gestohlenen Umwälzpumpe einer Heizungsanlage oder von gestohlenen Bauteilen eines Kraftfahrzeuges, beispielsweise eines Motors oder eines Getriebes oder auch einer Lichtmaschine kann dann vorgebeugt werden, wenn die Bauteile elektronisch manipulierfest signiert sind, und die Signatur über das Service-Gerät und die Schnittstelle der Mikroprozessoreinheit und/oder dem nichtflüchtigen Speicher zuführbar und in diesen zusammen mit der Echtwertzeitangabe speicherbar sind, und die gespeicherten Werte über die Schnittstelle aus dem nichtflüchtigen Speicher auslesbar sind.

Wird beispielsweise von einem Mitarbeiter eines Unternehmens ein gestohlenes und mit einer elektronischen Signatur versehenes Bauteil in eine Anlage eingebaut, so ist im Nachhinein feststell- und dokumentierbar, wann und insbesondere unter Benutzung welchen Service-Gerätes das entsprechende Bauteil eingebaut wurde.

Eine weitergehende Sicherheit kann dadurch erreicht werden, daß nach dem Austausch von elektronisch signierten Bauteilen die im nichtflüchtigen Speicher gespeicherten Signaturen der neu eingesetzten Bauteile der Mikroprozessoreinheit zuführbar und dort mit den in der Mikroprozessoreinheit gespeicherten Signaturen vergleichbar sind und die Mikroprozessoreinheit bei Nichtübereinstimmung der Signaturen ein Sperr-signal für seine Ausgänge setzt, sodaß die gesamte Steuerungsein-richtung stillgesetzt wird und nur unter Zuhilfenahme eines Service-Gerätes wieder funktionsfähig gemacht werden kann. Die Manipula-tionssicherheit kann hierbei dann noch wesentlich erhöht werden, wenn bei der Eingabe der Signatur ein Scanner verwendet werden muß, mit dem gleichzeitig die Signatur der Bauteile auf die entsprechenden Arbeitspapiere übertragbar ist.

Mit diesen Maßnahmen kann auch sichergestellt werden, daß eine neu zu installierende bzw zu montierende oder auch eine einer General-überholung zu unterziehende Anlage nur mit den vorgesehenen elektronisch signierten Bauteilen montiert oder überholt wird. Die Verwendung von auf nicht reellem Weg beschafften Teilen wird hierdurch sehr erschwert, in den meisten Fällen sogar unmöglich gemacht.

Um bei unvorhersehbarem und auch bei zu Manipulationszwecken gewillkürtem Stromausfall die im nichtflüchtigen Speicher gespeicherten Daten zu sichern, ist es vorteilhaft, als nichtflüchtigen Speicher einen Speicher zu verwenden, der die gespeicherten Daten bei Stromausfall behält, sodaß diese nach Aktivieren der Stromversorgung wieder auslesbar sind.

Gemäß einem weitergehenden Vorschlag der Erfindung kann das Service-Gerät über einen Personalcomputer an eine Datenbank anschließbar sein, sodaß die im Service-Gerät gespeicherten Daten zusammen mit einer Registriernummer der Anlage sowie der elektronischen Signatur des Service-Gerätes in die Datenbank einles- und speicherbar sind. Hierdurch bietet sich die Möglichkeit, die Häufigkeit bestimmter Störungen oder den Ausfall bestimmter Bauteile über einen längeren Zeitraum zu verfolgen und bei zu großer Ausfallhäufigkeit die entsprechenden Bauteile zu ersetzen. Da die entsprechenden Informationen relativ einfach an die Hersteller dieser reparaturintensiven Bauteile gegeben werden können, ist dies eine Möglichkeit um gezielte Maßnahmen zur Qualitätsverbesserung dieser Bauteile einleiten zu können.

Weitere Vorteile und Einzelheiten der Erfindung ergeben sich aus der nachfolgenden Beschreibung eines in der beigefügten Zeichnung dargestellten Ausführungs- bzw Anwendungsbeispieles der Erfindung.

Die Erfindung ist beim nachfolgend beschriebenen Ausführungsbeispiel in Verbindung mit einer Heizungsanlage dargestellt.

Selbstverständlich ist ihre Anwendungsmöglichkeit nicht auf den beschriebenen Anwendungsfall beschränkt. Vielmehr ist die Erfindung bei allen elektronischen Steuerungseinrichtungen verwendbar, mit denen bestimmte Betiebsparameter einer Anlage gesteuert werden und es hierbei eine Dokumentation oder auf einen Nachweis einer Manipulation der Eingabewerte oder auf einen Nachweis für eine versuchte oder durchgeführte Änderung von Betiebsparametern ankommt, deren Veränderung einem Fachmann vorbehalten ist.

Auch bietet die Erfindung inbesondere im Bereich der Kraftfahrzeuge insoweit zumindest einen mittelbaren Diebstahlschutz als bei Verwendung von signierten Bauteilen, die auf unreelle Weise beschafft wurden, die Inbetriebnahme des Kraftfahrzeuges durch die Notwendigkeit der Eingabe von eine Sperrung aufhebenden Signalen, die nur unter Verwendung eines Service-Gerätes eingegeben werden können, zumindest wesentlich erschwert wird, sodaß derartige Teile nur schwer veräußerbar sind.

In der beigefügten Zeichnung zeigen:
- Fig. 1:: ein vereinfacht dargestelltes Ausführungsbeispiel für eine Umwälzpumpe einer Heizungsanlage;
- Fig. 2:: ein Blockschaltbild einer mit der Erfindung ausgestatteten Steuerungseinrichtung;

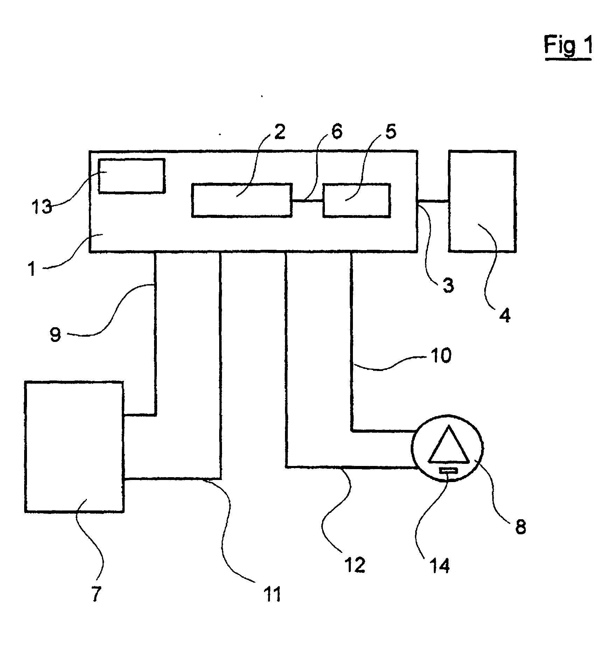

In Fig. 1 ist in Einfachdarstellung ein Ausführungsbeispiel der Erfindung gezeigt, das eine Steuerungseinrichtung 1, mit einer Mikroprozessoreinheit 2, sowie mit einer Schnittstelle 3 zum Anschluß eines Service-Gerätes 4 umfaßt, das beispielsweise von einem Laptop gebildet sein kann. Die Steuerungseinrichtung 1 umfaßt weiterhin einen nichtflüchtigen Speicher 5, der über eine Datenbusleitung 6 mit der Mikroprozessoreinheit 2 zu noch später näher zu erläuternden Zwecken zum Austausch von Daten verbunden ist. Der nichtflüchtigen Speicher 5 ist ein Speicher, der bei Ausfall der Stromversorgung die eingespeicherten Daten behält, sodaß diese nach Aktivierung der Stromversorgung wieder ausgelesen werden können. Hierdurch wird vermieden, daß durch Manipulationen an der Stromversorgung oder bei längerem Stillsetzen der Anlage der Inhalt des nichtflüchtigen Speichers 5 gelöscht wird und somit verloren geht.

An die Steuerungseinrichtung 1 ist ein Heizkessel 7, sowie eine Umwälzpumpe 8 über eine Steuerleitung 9 bzw 10 angeschlossen. Der Heizkessel 7 und die Umwälzpumpe 8 sind in üblicher Weise an die Stromversorgung der Anlage angeschlossen. Von der Mikroprozessoreinheit 2 führt eine Datenleitung 11 zum Heizkessel 7; eine weitere Datenleitung 12 führt von der Mikroprozessoreinheit 2 zur Umwälzpumpe 8. Über die beiden Datenleitungen 11,12 werden die von einem Bedienfeld 13 ausgehenden Eingabedaten für die verschiedenen Betiebsparameter über die Mikroprozessoreinheit 2 zum Heizkessel 7 bzw zur Umwälzpumpe 8 geleitet. Gleichzeitig werden die von den (nicht näher dargestellten) Meßfühlem des Heizkessels 7 bzw der Umwälzpumpe 8 ausgehenden Meßwertdaten zur Mikroprozessoreinheit 2 geführt. Sowohl die vom Bedienfeld 13 über die Mikroprozessoreinheit 2 zu den Bauteilen 7,8 geführten Eingabedaten, als auch die von den Meßfühlern der Bauteile 7,8 ausgehenden und zur Mikroprozessoreinheit 2 geführten Meßwertdaten werden über die Datenbusleitung 6 dem nichtflüchtigen Speicher 5 zugeführt und dort auslesbar gespeichert.

Die Umwälzpumpe 8 ist mit einer symbolisch angedeuteten elektronischen Signatur 14 versehen, die manipulierfest ist. Die Daten der Signatur 14 werden ebenfalls über die Datenleitung 12 zur Mikroprozessoreinheit 2 und von da zum nichtflüchtigen Speicher 4 geführt und dort auslesbar gespeichert.

Das Service-Gerät 4 trägt ebenfalls eine elektronische Signatur, deren Daten zur Mikroprozessoreinheit 2 und von da zum nichtflüchtigen Speicher 5 geführt werden. Mit Hilfe des Service-Gerätes 4 können sämtliche im nichtflüchtigen Speicher 5 abgelegten Daten über die Schnittstelle 3 aus dem nichtflüchtigen Speicher 5 ausgelesen werden. Das Service-Gerät 4 kann an einen üblichen Personalcomputer und/oder an eine Datenbank angeschlossen werden. Damit sind diese Daten über einen längeren Zeitraum speicherbar und können auch jederzeit ausgedruckt werden.

Die Mikroprozessoreinheit 2 und/oder der nichtflüchtige Speicher 5 sind mit einer Echtzeituhr ausgestattet, sodaß die für die Überwachung notwendigen Eingabe- und Meßwertdaten im nichtflüchtigen Speicher 5 zu speichernden Daten zusammen mit der jeweiligen Echtwertzeitangabe in diesem gespeichert werden und wieder auslesbar sind.
Ebenso ist die elektronische Signatur des Service-Gerätes 4 der Mikroprozessoreinheit 2 und dem nichtflüchtigen Speicher 5 über die Datenleitung 22,6 zuführbar, sodaß beim Anschluß des Service-Gerätes 4 an die Schnittstelle 3 die elektronische Signatur des Service-Gerätes 4 zusammen mit der Echtwertzeitangabe in der Mikroprozessoreinheit 2 und/oder im nichtflüchtigen Speicher 5 speicherbar und aus diesem wieder abrufbar ist.

Da sämtliche vom Bedienfeld 13 ausgehenden Eingabedaten für die Betriebsparameter dem nichtflüchtigen Speicher 5 zugeführt und dort abgespeichert werden, können diese somit zu jedem beliebigen Zeit-punkt mittels des an die Schnittstelle 3 anschließbaren Service-Gerätes 4 aus dem nichtflüchtigen Speicher 5 ausgelesen werden.

Da bei einer Eingabe der Daten mittels des Service-Gerätes 4 zwangsweise auch dessen Signatur zusammen mit den eingegebenen Daten im Service-Gerät 4 gespeichert werden, ist selbst im Nachhinein feststellbar, mit welchem Service-Gerät 4 diese Daten eingegeben wurden. Sind im nichtflüchtigen Speicher 5 jedoch Daten enthalten, denen keine Signatur eines Service-Gerätes 4 zugeordnet ist, so ist dies ein sicheres Anzeichen dafür, daß die entsprechenden Werte der Betiebsparameter von einer nicht authorisierten Person eingegeben wurden.

Nachdem auch die Meßwertdaten der Meßfühler über die Mikroprozessoreinheit 2 dem nichtflüchtigen Speicher 5 zugeführt und dort gespeichert werden, können die Werte der Betiebsparameter auch nachträglich ausgelesen und Grenzwertüberschreitungen festgestellt werden.

Führt eine Grenzwertüberschreitung zu einer Störung, so kann selbst im Nachhinein die Störungsursache anhand der aus dem nichtflüchtigen Speicher 5 ausgelesenen Werte leicht festgestellt werden.

Da die elektronische Signatur der Bauteile der Anlage ebenfalls im nichtflüchtigen Speicher 5 gespeichert und wieder ausgelesen werden kann, ist es auch möglich innerhalb der Mikroprozessoreinheit 2 eine Vergleichsschaltung für die in dieser abgelegte Signatur eines bestimmten Bauteils mit der aus dem nichtflüchtigen Speicher 5 auslesbaren Signatur eines neu eingesetzten Bauteils vorzusehen, die bei Nichtübereinstimmung oder beim Fehlen der Signaturdaten des neu eingesetzten Bauteils die Steuerungseinrichtung insgesamt stillsetzt. Zur Wiederinbetriebnahme der Steuerungseinrichtung 1 muß dann der Mikroprozessoreinheit 2 ein nur über das Service-Gerät 4 verfügbares Signal zugeführt werden.

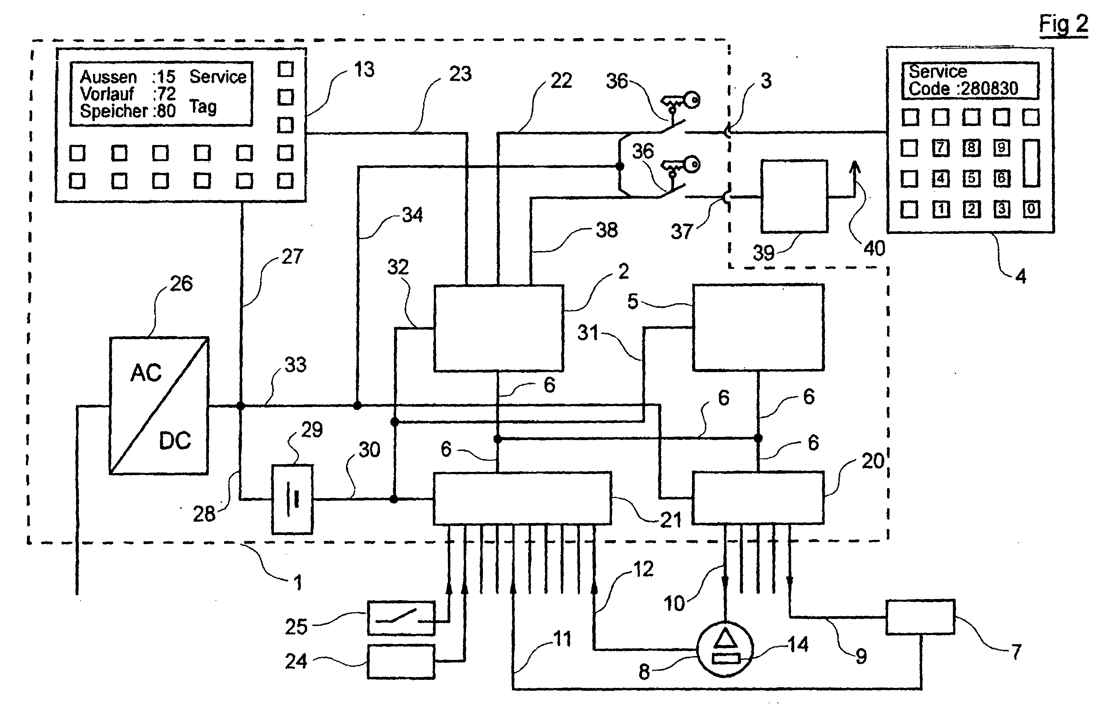

Das in Fig. 2 gezeigte Blockschaltbild umfaßt die Steuerungseinrichtung 1, mit der Mikroprozessoreinheit 2, sowie der Schnittstelle 3 zum Anschluß des Service-Gerätes 4 und den nichtflüchtigen Speicher 5, der über die Datenbusleitung 6 mit der Mikroprozessoreinheit 2 verbunden ist. Die Datenbusleitung 6 verbindet die Ausgangselektronik 20 der Steuerungsleitungen 9,10 für die Eingabedaten der verschiedenen Betriebsparameter der einzelnen Bauteile wie Heizkessel 7 und Umwälzpumpe 8 sowohl mit der Mikroprozessoreinheit 2 als auch mit dem nichtflüchtigen Speicher 5. Über die Datenbusleitung 6 ist ferner die Eingangselektronik 21 der Datenleitungen 11,12 für die Daten der Meßwertfühler für die Betriebsparameter von Heizkessel 7 und Umwälzpumpe 8 sowohl mit der Mikroprozessoreinheit 2 als auch mit dem nichtflüchtigen Speicher 5 verbunden.

Da sämtliche Meßwertdaten der verschiedenen Betriebsparameter der Mikroprozessoreinheit 2 und auch dem nichtflüchtigen Speicher 5 zugeführt werden, kann dann, wenn die Meßwertdaten eine Störung an einem Bauteil signalisieren, diese Störung einerseits am Bedienfeld 13 angezeigt und andererseits im nichtflüchtigen Speicher 5 auslesbar gespeichert werden.

Sofern ein Bauteil, wie beispielsweise die Umwälzpumpe 8 mit einer bauteilspezifischen elektronischen Signatur 14 versehen ist, ist diese ebenfalls über die Datenleitung 12 der Mikroprozessoreinheit 2 und dem nichtflüchtigen Speicher 5 zuführbar und zusammen mit der Echtwertzeitangabe ihrer Speicherung in der Mikroprozessoreinheit 2 bzw dem nichtflüchtigen Speicher 5 speicherbar und auch wieder auslesbar.

Die Mikroprozessoreinheit 2 und der nichtflüchtige Speicher 5 sind über eine Datenleitung 22 mit der Schnittstelle 3 verbunden. Die Mikroprozessoreinheit 2 und somit auch der nichtflüchtige Speicher 5 sind ferner über eine Leitung 23 mit dem Bedienfeld 13 verbunden. Damit können die Eingabedaten für die verschiedenen Betriebsparameter sowohl über das Service-Gerät 4 als auch über das Bedienfeld 13 der Mikroprozessoreinheit 2 und damit auch dem nichtflüchtigen Speicher 5 zugeführt werden, in dem sie auslesbar gespeichert werden.

Um Störungsursachen an funktionswesentlichen Teilen der Anlage zu erkennen, die mittels einer "Ja-Nein-Aussage" wie beispielsweise bei Magnetventilen, Flammenwächtem, Zündvorrichtungen u.ä. feststellbar sind, sind an solchen Bauteilen Sensoren 24 vorgesehen, deren Signale über die Eingangselektronik 21 dem nichtflüchtigen Speicher 5 und/oder der Mikroprozessoreinheit 2 und/oder dem Bedienfeld 13 zuführbar sind. Auf diese Weise kann der Ausfall dieser Umwälzpumpe 8 im Bedienfeld 13 angezeigt und zusammen mit der Echtwertzeitangabe im nichtflüchtigen Speicher 5 wiederauslesbar gespeichert werden.

Um auch den Zugang zu der Eingriffssphäre des Betreibers entzogenen Eingabe- und/oder Justiermitteln die im Innern der Verkleidung oder im Innern eines separaten Gehäuses angeordnet sind, überwachen zu können, sind an den entsprechenden Stellen Sicherheitskontakte 25 vorgesehen, die beim Entfernen der Verkleidung, bzw beim Öffnen des Gehäuses der Mikroprozessoreinheit 2 und/oder dem nichtflüchtigen Speicher 5 über die Eingangselektronik 21 und die Datenbusleitung 6 ein entsprechendes Signal zuführen, das im nichtflüchtigen Speicher 5 zusammen mit der Echtwertzeitangabe seines Einganges in diesem auslesbar gespeichert wird. Dabei kann die Mikroprozessoreinheit 2 so geschaltet sein, daß sie bei Eingang eines Signals von einem sicherheitsrelvanten Sicherheitskontakt die Steuerungseinrichtung 1 in ihrer Gesamtheit außer Betrieb setzt. Auch das die Außerbetriebsetzung der Steuerungseinrichtung 1 bewirkende Signal wird dem nichtflüchtigen Speicher 5 zugeführt und in diesem zusammen mit der Echtwertzeitangabe auslesbar gespeichert. Auch hier kann vorgesehen sein, daß zur Wiederinbetriebnahme der Steuerungseinrichtung 1 der Mikroprozessoreinheit 2 ein nur über das Service-Gerät 4 verfügbares Signal zugeführt werden muß.

Zur Stromversorgung der Steuerungseinrichtung 1 weist diese ein von einer externen Stromquelle versorgtes Netzteil 26 auf, das über eine Leitung 27 mit dem Bedienfeld 13 verbunden ist. Über von der Leitung 27 abgehende Leitungen 33 und 34 werden die Ausgangselektronik 20 und die Schnittstelle 3 mit Strom versorgt.

Das Netzteil 26 ist über eine Leitung 28 mit einer aufladbaren Batterie 29 verbunden, die über eine Leitung 30 und die davon abzweigenden Leitungen 31 und 32 die Eingangselektronik 21 sowie den nichtflüchtigen Speicher 5 und die Mikroprozessoreinheit 2 mit Strom versorgt. Damit ist eine Stromversorgung dieser Einheiten auch dann sichergestellt, wenn die externe Stromversorgung ausfällt oder absichtlich oder unabsichtlich abgeschaltet wird. Um die Versorgung dieser Einheiten im netzstromlosen Zustand über eine möglichst lange Zeit aufrecht zu erhalten, ist die Steuerungseinrichtung 1 als digitale Mikroprozessorsteuerung in stromsparender C-MOS Technologie aufgebaut.

Um einen unberechtigten Zugang von der Schnittstelle 3 über die Leitung 22 zur Mikroprozessoreinheit 2 und somit auch zum nichtflüchtigen Speicher 5 zu verhindern, ist die Leitung 22 durch eine elektronische oder eine mechanische Sicherheitseinrichtung unterbrechbar, die beispielsweise von einem abschließbaren Schalter 36 gebildet sein kann.

Schließlich kann zusätzlich zur Schnittstelle 3 eine weitere Schnittstelle 37 vorgesehen sein, die über eine zusätzliche Leitung 38 mit der Mikroprozessoreinheit 2 und somit auch mit dem nichtflüchtigen Speicher 5 verbunden ist. Auch die Leitung 38 kann durch eine Sicherungseinrichtung, beispielsweise einen weiteren abschließbaren Schalter 37 unterbrechbar sein. Die beiden abschließbaren Schalter 37 können vorzugsweise mit dem gleichen Schlüssel betätigt werden.

An die Schnittstelle 37 kann eine Telekommunationseinrichtung 39 nach GSM-Standard angeschlossen werden, die entweder über Funk oder unter Verwendung eines an sich bekannten Modems über ein Telefon, gegebenenfalls auch über ein Funktelefon mit einer externen Stelle 40, die auch einen Drucker einschließen kann, verbunden werden kann. Dies ermöglicht, im Fall des Auftretens einer Störung in der Anlage von der externen Stelle 40 aus zunächst ein die momentanen Betriebsparameter derselben enthaltendes Protokoll auszudrucken und sodann von dieser über die Telekommunationseinrichtung 39 und die Leitung 38 der Mikroprozessoreinheit 2 und somit dem nichtflüchtigen Speicher 5 Eingabedaten zur Veränderung der Betriebsparameter zuzuführen.

Hierbei kann selbstverständlich vorgesehen sein, daß die Telekommunationseinrichtung 39 die Leitung 38 zur Mikroprozessoreinheit 2 erst nach Eingabe eines Codewortes freigibt und dieses im nichtflüchtigen Speicher 5 wie die elektronische Signatur des Service-Gerätes zusammen mit den eingegebenen Eingabewerten und der Echtwertzeitangbe gespeichert wird.

## Patentansprüche

1. Elektrische oder elektronische Steuerungseinrichtung für Heizungsanlagen aufweisend ein Bedienfeld (13) zur Anzeige und Eingabe der Betriebsparameter sowie eine Mikroprozessoreinheit (2) deren Eingänge mit dem Bedienfeld und den Meßwertgebern für die Betriebsparameter, und deren Ausgang mit den Stellgliedern für die Betriebsparameter verbunden sind,
**dadurch gekennzeichnet, daß**
die Mikroprozessoreinheit (2) über eine Datenbusleitung (6) mit einem nichtflüchtigen Speicher (5) zur Speicherung und Dokumentation der ihr zuführbaren Eingabe- und/oder Meßwertdaten der Betriebsparameter verbunden ist, und diese Daten mittels eines über eine Schnittstelle (3) an die Mikroprozessoreinheit (2) anschließbaren Service-Gerätes (4) aus dem nichtflüchtigen Speicher (5) auslesbar und im Service-Gerät (4) speicherbar sind und das Service-Gerät (4) mit einer elektronischen Signatur versehen ist, die im nichtflüchtigen Speicher (5) speicherbar und über die Schnittstelle (3) aus diesem auslesbar ist, wobei das Service-Gerät (4) über die Schnittstelle (3) mit dem Bedienfeld (13) oder der Mikroprozessoreinheit (2) verbindbar ist, um die eingebenen Sollwerte der Betriebsparameter zusammen mit der elektronischen Signatur des Service-Gerätes (4) im nichtflüchtigen Speicher (5) zu speichern und die gespeicherten Werte über die Schnittstelle (3) aus dem nichtflüchtigen Speicher (5) auszulesen.

2. Einrichtung nach Anspruch 1, **dadurch gekennzeichnet, daß**
die im nichtflüchtigen Speicher (5) gespeicherte elektronische Signatur des Service-Gerätes (4) löschbar und durch die elektronische Signatur eines anderen Service-Gerätes (4) ersetzbar ist.

3. Einrichtung nach einem oder mehreren der vorangehenden Ansprüche, **dadurch gekennzeichnet, daß**
die Mikroprozessoreinheit (2) und/oder der nichtflüchtige Speicher (5) eine Echtwertzeitangabe aufweist und diese zumindest bei Veränderung der Eingabedaten der Betriebsparameter zusammen mit den Eingabedaten im nichtflüchtigen Speicher (5) speicherbar und die gespeicherten Werte über die Schnittstelle (3) aus dem nichtflüchtigen Speicher (5) auslesbar sind.

4. Einrichtung nach einem oder mehreren der vorangehenden Ansprüche, **dadurch gekennzeichnet, daß**
die Meßwertdaten von Über- oder Unterschreitungen von Grenzwerten der Betriebsparameter zusammen mit der Echtwertzeitangabe im nichtflüchtigen Speicher (5) speicherbar und die gespeicherten Werte über die Schnittstelle (3) aus dem nichtflüchtigen Speicher (5) auslesbar sind.

5. Einrichtung nach einem oder mehreren der vorangehenden Ansprüche, **dadurch gekennzeichnet, daß**
die Funktion von funktionswesentlichen Teilen der Anlage mittels Sensoren (24) überwachbar ist und deren Signale dem nichtflüchtigen Speicher (5) und/oder der Mikroprozessoreinheit (2) und/oder dem Bedienfeld (13) zuführbar sind.

6. Einrichtung nach einem oder mehreren der vorangehenden Ansprüche, **dadurch gekennzeichnet, daß**
die dem nichtflüchtigen Speicher (5) zuführbaren Signale der Sensoren (24) in diesem zusammen mit der Echtwertzeitangabe speicherbar und die gespeicherten Werte über die Schnittstelle (3) aus diesem auslesbar sind.

7. Einrichtung nach einem oder mehreren der vorangehenden Ansprüche, **dadurch gekennzeichnet, daß**
die Zugänge zu außerhalb des Bedienfeldes (13) angeordneten Einstellmitteln für Betriebsparameter durch Sicherheitskontakte (25) überwachbar sind, deren Ausgangssignale dem nichtflüchtigen Speicher (5) zuführbar und in diesem zusammen mit der Echtwertzeitangabe speicherbar sind und die gespeicherten Werte über die Schnittstelle (3) aus diesem auslesbar sind.

8. Einrichtung nach einem oder mehreren der vorangehenden Ansprüche, insbesondere nach Anspruch 1, **gekennzeichnet**
**durch** die Verwendung von elektronisch manipulierfest signierten Bauteilen (8), deren Signatur (14) über das Service-Gerät (4) und die Schnittstelle (3) der Mikroprozessoreinheit (2) und/oder dem nichtflüchtigen Speicher (5) zuführbar und in diesen zusammen mit der Echtwertzeitangabe speicherbar sind und die gespeicherten Werte über die Schnittstelle (3) aus dem nichtflüchtigen Speicher (5) auslesbar sind.

9. Einrichtung nach Anspruch 7 und 8, **dadurch gekennzeichnet, daß**
beim Austausch von elektronisch signierten Bauteilen (8) die in der Mikroprozessoreinheit (2) und dem nichtflüchtigen Speicher (5) gespeicherten Signaturen (14) der ausgetauschten Bauteile (8) über das Service-Gerät (4) löschbar und durch die Signaturen (14) der neuen Bauteile (8) ersetzbar sind.

10. Einrichtung nach Anspruch 9, **dadurch gekennzeichnet, daß**
nach dem Austausch von elektronisch signierten Bauteilen (8) die im nichtflüchtigen Speicher (5) gespeicherten Signaturen (14) der neu eingesetzten Bauteile (8) der Mikroprozessoreinheit (2) zuführbar und dort mit den in der Mikroprozessoreinheit (2) gespeicherten Signaturen (14) vergleichbar sind und die Mikroprozessoreinheit (2) bei Nichtübereinstimmung der Signaturen (14) ein Sperrsignal für seine Ausgänge setzt.

11. Einrichtung nach Anspruch 10, **dadurch gekennzeichnet, daß**
die Sperrsignale nur mittels des Service-Gerätes (4) löschbar sind.

12. Einrichtung nach einem oder mehreren der vorangehenden Ansprüche, **dadurch gekennzeichnet, daß**
das Service-Gerät (4) über einen Personalcomputer an eine Datenbank anschließbar ist, und die im Service-Gerät (4) gespeicherten Daten zusammen mit einer Registriernummer der Anlage sowie der elektronischen Signatur des Service-Gerätes (4) in die Datenbank einles- und speicherbar sind.

13. Einrichtung nach einem oder mehreren der vorangehenden Ansprüche, **dadurch gekennzeichnet, daß**
die die Mikroprozessoreinheit (2) mit der Schnittstelle (3) verbindende Leitung (22) mittels einer Sicherungseinrichtung (abschließbarer Schalter 36) unterbrechbar ist.

14. Einrichtung nach einem oder mehreren der vorangehenden Ansprüche, **dadurch gekennzeichnet, daß**
zusätzlich zur Schnittstelle (3) eine weitere Schnittstelle (37) vorgesehen ist, die über eine weitere Leitung (38) mit der Mikroprozessoreinheit (2) verbindbar ist.

15. Einrichtung nach einem oder mehreren der vorangehenden Ansprüche, **dadurch gekennzeichnet, daß**
die die Mikroprozessoreinheit (2) mit der Schnittstelle (3) verbindende Leitung (38) mittels einer Sicherungseinrichtung (abschließbarer Schalter 36) unterbrechbar ist.

16. Einrichtung nach einem oder mehreren der vorangehenden Ansprüche, **dadurch gekennzeichnet, daß**
die Sicherungseinrichtung für die Leitung (22) und die Sicherungseinrichtung für die Leitung (38) mittels des gleichen Betätigungselements betätigbar sind.

17. Einrichtung nach einem oder mehreren der vorangehenden Ansprüche, **dadurch gekennzeichnet, daß**
der Mikroprozessoreinheit (2) über die Schnittstelle (37) und eine Telekommunationseinrichtung (39) Eingabedaten für die Betriebsparameter zuführbar sind.

## Claims

1. Electrical or electronic control apparatus for controlling heating installations, said apparatus including a control panel (13) for displaying and inputting the operating parameters as well as a microprocessor unit (2), the inputs of which are connected to the control panel and the measured value transmitters for the operating parameters, and the output of which is connected to the adjusting members for the operating parameters, **characterised in that** the microprocessor unit (2) is connected, via a data bus-bar (6), to a non-volatile storage unit (5) for storing and recording the input and/or measured value data of the operating parameters which are suppliable to said microprocessor unit, and these data are readable from the non-volatile storage unit (5) by means of a service appliance (4), which can communicate with the microprocessor unit (2) via an interface (3), and are storable in the service appliance (4), and the service appliance (4) is provided with an electronic signature, which is storable in the non-volatile storage unit (5) and is readable therefrom via the interface (3), the service appliance (4) being connectable, via the interface (3), to the control panel (13) or the microprocessor unit (2) in order to store the input theoretical values of the operating parameters together with the electronic signature of the service appliance (4) in the non-volatile storage unit (5) and to read the stored values from the non-volatile storage unit (5) via the interface (3).

2. Apparatus according to claim 1, **characterised in that** the electronic signature of the service appliance (4), stored in the non-volatile storage unit (5), can be cancelled and replaced by the electronic signature of another service appliance (4).

3. Apparatus according to one or more of the preceding claims, **characterised in that** the microprocessor unit (2) and/or the non-volatile storage unit (5) have/has real time information, and this is storable, together with the input data, in the non-volatile storage unit (5) at least when there is an alteration in the input data of the operating parameters, and the stored values are readable from the non-volatile storage unit (5) via the interface (3).

4. Apparatus according to one or more of the preceding claims, **characterised in that** the measured value data exceeding or falling below limit values of the operating parameters, together with the real time information, are storable in the non-volatile storage unit (5), and the stored values are readable from the non-volatile storage unit (5) via the interface (3).

5. Apparatus according to one or more of the preceding claims, **characterised in that** the function of operationally essential parts of the installation can be monitored by means of sensors (24), and the signals of said sensors can be supplied to the non-volatile storage unit (5) and/or to the microprocessor unit (2) and/or to the control panel (13).

6. Apparatus according to one or more of the preceding claims, **characterised in that** the signals of the sensors (24), which can be supplied to the non-volatile storage unit (5), are storable in said unit together with the real time information, and the stored values are readable from said unit via the interface (3).

7. Apparatus according to one or more of the preceding claims, **characterised in that** the accesses to setting means for setting operating parameters, which means are disposed externally of the control panel (13), can be monitored by safety contacts (25), the output signals of which can be supplied to the non-volatile storage unit (5) and stored therein together with the real time information, and the stored values are readable from said unit via the interface (3)

8. Apparatus according to one or more of the preceding claims, more especially according to claim 1, **characterised by** the use of components (8) which are electronically signed in a manipulation-resistant manner, the signatures (14) of which can be supplied, via the service appliance (4) and the interface (3), to the microprocessor unit (2) and/or to the non-volatile storage unit (5) and are storable therein together with the real time information, and the stored values are readable from the non-volatile storage unit (5) via the interface (3).

9. Apparatus according to claim 7 and 8, **characterised in that**, if electronically signed components (8) are interchanged, the signatures (14) of the interchanged components (8), stored in the microprocessor unit (2) and in the non-volatile storage unit (5), can be cancelled via the service appliance (4) and replaced by the signatures (14) of the new components (8).

10. Apparatus according to claim 9, **characterised in that**, after the interchange of electronically signed components (8), the signatures (14) of the newly installed components (8), which are stored in the non-volatile storage unit (5), can be supplied to the microprocessor unit (2) and can be compared there with the signatures (14) stored in the microprocessor unit (2), and the microprocessor unit (2) sets a blocking signal for its outputs if the signatures (14) do not coincide.

11. Apparatus according to claim 10, **characterised in that** the blocking signals can only be cancelled by means of the service appliance (4).

12. Apparatus according to one or more of the preceding claims, **characterised in that** the service appliance (4) can communicate with a databank via a personal computer, and the data stored in the service appliance (4), together with a registration number for the installation as well as the electronic signature of the service appliance (4), can be read into the databank and stored.

13. Apparatus according to one or more of the preceding claims, **characterised in that** the line (22), connecting the microprocessor unit (2) to the interface (3), can be interrupted by means of a safety means (disconnectable switch 36).

14. Apparatus according to one or more of the preceding claims, **characterised in that**, in addition to the interface (3), an additional interface (37) is provided, which can be connected to the microprocessor unit (2) via an additional line (38).

15. Apparatus according to one or more of the preceding claims, **characterised in that** the line (38), connecting the microprocessor unit (2) to the interface (3), can be interrupted by means of a safety means (disconnectable switch 36).

16. Apparatus according to one or more of the preceding claims, **characterised in that** the safety means for the line (22) and the safety means for the line (38) are actuatable by means of the same actuating member.

17. Apparatus according to one or more of the preceding claims, **characterised in that** input data for the operating parameters can be supplied to the microprocessor unit (2) via the interface (3) and a telecommunication means (39).

## Revendications

1. Dispositif de commande électrique ou électronique pour des installations de chauffage comportant un panneau de commande (13) pour l'affichage et 1' entrée de paramètres de fonctionnement ainsi qu'une unité de microprocesseur (2) dont les entrées sont raccordées au panneau de commande et aux capteurs de mesure pour les paramètres de fonctionnement et dont la sortie est raccordée à des composants de réglage pour les paramètres de fonctionnement, **caractérisé en ce que**
l'unité de microprocesseur (2) est raccordée à une mémoire rémanente (5) par l'intermédiaire d'une ligne de bus de données (6) pour la mémorisation et la documentation des données d'entrée et/ou de mesure des paramètres de fonctionnement, et **en ce que** ces données peuvent être extraites de la mémoire rémanente (5) par l'intermédiaire d'une unité de service (4) raccordable à l'unité de microprocesseur (2) par une interface (3) et peuvent être mémorisées dans l'unité de service (4), et **en ce que** l'unité de service (4) est équipée d'une signature électronique qui peut être mémorisée dans la mémoire rémanente (5) et extraite de celle-ci par l'interface (3), l'unité de service (4) pouvant être raccordée au panneau de commande (13) ou à l'unité de microprocesseur (2) par l'interface (3) pour mémoriser les valeurs de consigne entrées des paramètres de fonctionnement conjointement avec la signature électronique de l'unité de service (4) dans la mémoire rémanente (5) et pour extraire les valeurs mémorisées de la mémoire rémanente (5) par l'interface (3).

2. Dispositif selon la revendication 1, **caractérisé en ce que** la signature électronique de l'unité de service (4) mémorisée dans la mémoire rémanente (5) peut être effacée et peut être remplacée par la signature électronique d'une autre unité de service (4).

3. Dispositif selon une ou plusieurs des revendications précédentes, **caractérisé en ce que** l'unité de microprocesseur (2) et/ou la mémoire rémanente (5) comporte une indication de valeurs de temps réel et **en ce que** celle-ci, conjointement avec les données d'entrée, est mémorisable dans la mémoire rémanente (5), au moins en cas de modification des données d' entrée des paramètres de fonctionnement, et **en ce que** les valeurs mémorisées peuvent être extraites de la mémoire rémanente (5) par l'interface (3).

4. Dispositif selon une ou plusieurs des revendications précédentes, **caractérisé en ce que** les données des valeurs de mesure des dépassements en plus ou en moins de valeurs limites des paramètres de fonctionnement, conjointement avec l'indication de valeurs de temps réel, sont mémorisables dans la mémoire rémanente (5), et **en ce que** les valeurs mémorisées peuvent être extraites de la mémoire rémanente (5) par l'interface (3).

5. Dispositif selon une ou plusieurs des revendications précédentes, **caractérisé en ce que** le fonctionnement de composants de l'installation essentiels au fonctionnement peut être supervisé par des capteurs (24) dont les signaux peuvent être amenés à la mémoire rémanente (5) et/ou à l'unité de microprocesseur (2) et/ou au panneau de commande (13).

6. Dispositif selon une ou plusieurs des revendications précédentes, **caractérisé en ce que** les signaux des capteurs (24) qui peuvent être amenés à la mémoire rémanente (5) sont mémorisables, conjointement avec l'indication de valeurs de temps réel, dans celle-ci et **en ce que** les valeurs mémorisées peuvent être extraites de celle-ci par l'interface (3).

7. Dispositif selon une ou plusieurs des revendications précédentes, **caractérisé en ce que** les accès à des moyens de réglage pour les paramètres de fonctionnement disposés à l'extérieur du panneau de commande (13) peuvent être supervisés par des contacts de sécurité (25) dont les signaux de sortie peuvent être amenés à la mémoire rémanente (5) et sont mémorisables, conjointement avec l'indication de valeurs de temps réel, dans celle-ci et **en ce que** les valeurs mémorisées peuvent être extraites de celle-ci par l'interface (3).

8. Dispositif selon une ou plusieurs des revendications précédentes, en particulier selon la revendication 1, **caractérisé par** l'utilisation de composants (8) signés électroniquement résistants aux manipulations dont la signature (14), peut être amenée à l'unité de microprocesseur (2) et/ou à la mémoire rémanente (5) par l'unité de service (4) et par l'interface (3), et est mémorisable, conjointement avec l'indication de valeurs de temps réel, et les valeurs mémorisées peuvent être extraites de la mémoire rémanente (5) par l'interface (3).

9. Dispositif selon la revendication 7 ou 8, **caractérisé en ce que**, lors du remplacement de composants signés électroniquement (8), les signatures (14) mémorisées dans l'unité de microprocesseur (2) et la mémoire rémanente (5) des composants remplacés (8) peuvent être effacées par l'unité de service (4) et remplacées par les signatures (4) des nouveaux composants (8).

10. Dispositif selon la revendication 9, **caractérisé en ce que**, après le remplacement de composants signés électroniquement (8), les signatures (14) mémorisées dans la mémoire rémanente (5) des composants nouvellement utilisés (8) peuvent être amenées à l'unité de microprocesseur (2) et comparées aux signatures (14) mémorisées dans l'unité de microprocesseur (2), et **en ce que**, en cas de non-concordance des signatures, l'unité de microprocesseur (2) fixe un signal d'interdiction pour ses sorties.

11. Dispositif selon la revendication 10, **caractérisé en ce que** les signaux d'interdiction ne peuvent être effacés qu'à l'aide de l'unité de service (4).

12. Dispositif selon une ou plusieurs des revendications précédentes, **caractérisé en ce que** l'unité de service (4) est raccordable à une banque de données par un ordinateur personnel, et **en ce que** les données mémorisées dans l'unité de service (4), conjointement avec un numéro d'enregistrement de l'installation ainsi que de la signature électronique de l'unité de service (4), peuvent être extraites et mémorisées dans la banque de données.

13. Dispositif selon une ou plusieurs des revendications précédentes, **caractérisé en ce que** la ligne (22) raccordant l'unité de microprocesseur (2) à l'interface (3) peut être interrompue à l'aide d' un dispositif de sécurité (commutateur verrouillable).

14. Dispositif selon une ou plusieurs des revendications précédentes, **caractérisé en ce que**, en plus de l'interface (3), il est prévu une autre interface (37) qui est raccordable à l'unité de microprocesseur (2) par une autre ligne (38).

15. Dispositif selon une ou plusieurs des revendications précédentes, **caractérisé en ce que** la ligne (38) raccordant l'unité de microprocesseur (2) à l'interface (3) peut être interrompue à l'aide d' un dispositif de sécurité (commutateur verrouillable).

16. Dispositif selon une ou plusieurs des revendications précédentes, **caractérisé en ce que** le dispositif de sécurité pour la ligne (22) et le dispositif de sécurité pour la ligne (38) sont actionnables à l'aide du même élément de commande.

17. Dispositif selon une ou plusieurs des revendications précédentes, **caractérisé en ce que** les données d'entrée pour les paramètres de fonctionnement peuvent être amenées à l'unité de microprocesseur (2) par l'interface (37) et par un dispositif de télécommunication (39).
